Europäisches Patentamt

European Patent Office

Office européen des brevets

(11) Publication number: **0 449 389 A1**

# EUROPEAN PATENT APPLICATION

(21) Application number: **91200765.5**

(22) Date of filing: **02.04.91**

(51) Int. Cl.⁵: **A01G 9/14**

(30) Priority: **30.03.90 NL 9000758**

(43) Date of publication of application:
**02.10.91 Bulletin 91/40**

(84) Designated Contracting States:
**BE DE DK FR GB NL**

(71) Applicant: **BOMKAS KASSENBOUW B.V.**
**Veilingweg 7**
**NL-2675 BR Honselersdijk(NL)**

(72) Inventor: **Bom, Jan**
**No. 8a, Dorpskade**
**NL-2291 HR Wateringen(NL)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **Horticultural glasshouse with main truss and rainwater gutter.**

(57) A horticultural glasshouse (1) is provided, comprising transparent side walls (2) and main trusses (3) connecting opposite side walls (2). The glasshouse (1) is covered by slopingly disposed, transparent covering parts (4), and grooves are formed between adjoining covering parts (4). In each groove a rainwater gutter (5) is arranged substantially vertically above and parallel to a main truss (3), in order to minimize the obstruction of incident sunlight. Each gutter (5) is formed by a profiled beam (6) connecting the covering parts (4) and arranged on an associated main truss (3), the beam (6) being covered on its upper side with a plastic sealing layer, in order to further minimize sunlight obstruction.

FIG.2

The invention relates to a horticultural glasshouse which has a number of transparent side walls and at least two opposite walls of which are connected on their upper part by at least one lying main truss, and slopingly disposed, transparent covering parts, whereof adjoining covering parts are connected in each case by elements having a groove in which a rainwater gutter is arranged, wherein each rainwater gutter is placed substantially vertically above a main truss and runs parallel thereto.

Such a glasshouse is known from the Swiss patent specification 644.247 and has the advantage relative to earlier horticultural glasshouses, wherein the rainwater gutters and main trusses lie transversely of each other, that the shadows of these two construction elements substantially coincide so that they do not each separately exclude light.

The resulting reduction of the combined shading effect results in a higher light yield in the glasshouse, whereby the growth of a crop cultivated in the glasshouse is furthered and the energy costs for heating and lighting the glasshouse are reduced.

The horticultural glasshouse from the cited patent specification displays the drawback however that each rainwater gutter has the form of a separate construction element, whereby the combination of the main truss and the rainwater gutter forms a voluminous construction, which has a considerable shading effect particularly in the case of non-perpendicular light incidence.

The present invention therefore has for its object to provide a glasshouse of the above described type wherein this drawback does not occur. This is achieved according to the invention in that each rainwater gutter is formed by a profiled beam connecting the covering parts and arranged on an associated main truss, which beam is covered on its upper side by a plastic sealing layer. In this manner the light obstruction of the rainwater gutter is greatly reduced, which results in better growth and lower energy costs.

While a gutter for a horticultural glasshouse is known from the Netherlands patent application 8801606 in the form of a profiled beam which connects the covering parts and which is covered by a plastic sealing layer on its upper side, this beam is not arranged on a main truss supporting the beam and parallel thereto, and therefore takes a very heavy form, which results in a considerable shading effect.

When the sealing layer has the form of a strip with a practically bell-shaped cross sectional profile connecting the covering parts, a tongue-shaped part of which is clamped in the beam, good drainage of the horticultural glasshouse is obtained via the groove between adjoining covering parts.

In order to enable inspection and maintenance operations on the outside of the covering parts when there is no separate rainwater gutter in which it is possible to walk, the invention has the further object to provide a vehicle displaceable along the rainwater gutter, which vehicle comprises a carrier which is provided with at least one wheel guidable in the rainwater gutter and with jibs laterally oriented on either side transversely of the main plane of the wheel and on the ends of which are arranged means for guiding the jibs along the line of contact between adjoining covering parts. By making use of such a vehicle operations on top of the glasshouse can be performed simply and safely.

Mentioned and other features of the horticultural glasshouse according to the invention are further elucidated on the basis of an embodiment wherein reference is made to the annexed drawing, in which corresponding parts are designated by corresponding reference numerals and in which:

fig. 1 shows a partially broken away perspective view of a horticultural glasshouse according to the invention;

fig. 2 shows a detailed perspective view along the arrow II in fig. 1; and

fig. 3 is a schematic, perspective view of means for opening and closing a movable window part of a glasshouse according to the invention.

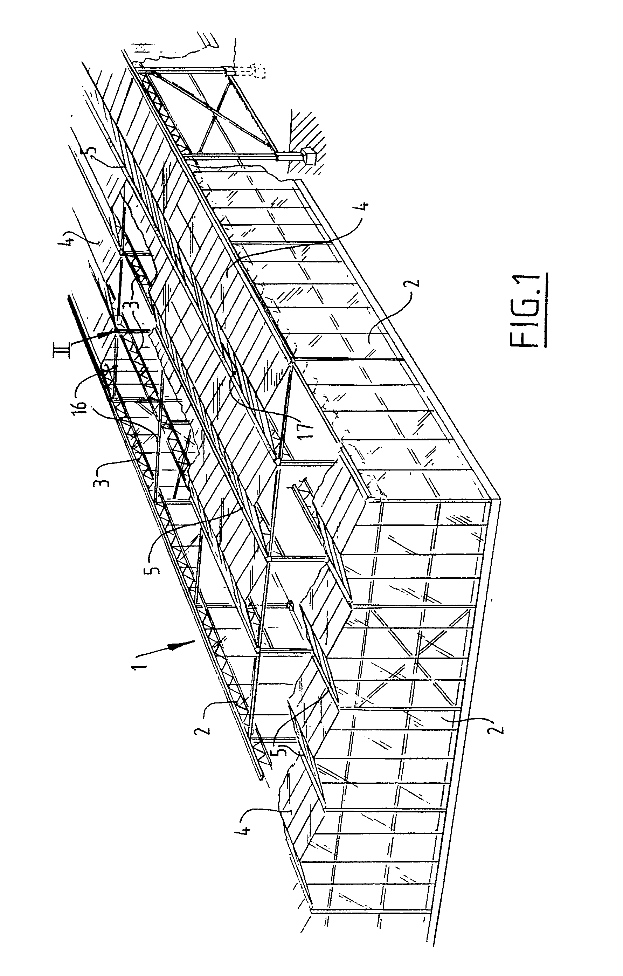

A horticultural glasshouse 1 (fig. 1) comprises a number of transparent side walls 2, a number of main trusses 3 which connect opposite side walls 2, and a number of slopingly disposed, transparent covering parts 4. Formed in each case between adjoining covering parts 4 is a groove in which a rainwater gutter 5 is arranged. The rainwater gutters 5 are arranged vertically above the main trusses 3. The obstruction of incident sunlight due to the presence of the main trusses 3 and the rainwater gutters 5 is therefore minimal. The horticultural glasshouse 1 further comprises auxiliary trusses 16 running transversely of the main trusses and the covering parts 4 have movable window parts 17.

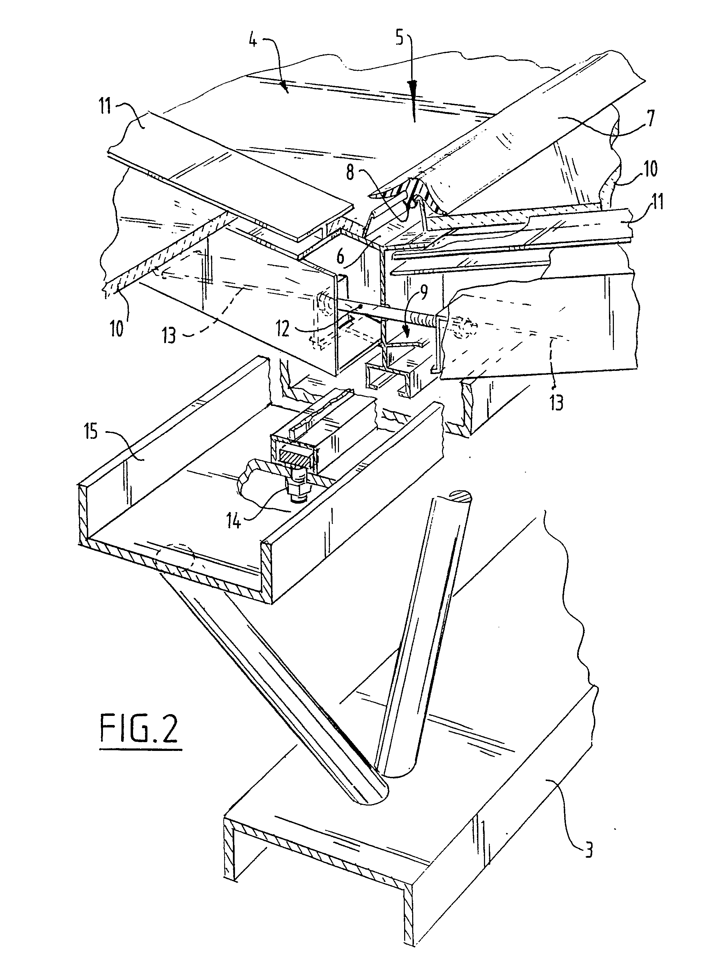

The transparent covering parts 4 comprise glass or plastic panels 10 (fig. 2) which are received in bars 11. The panels 10 support with their lower edge against standing parts of a profiled beam 6, between which is also clamped the tongue-like part 8 of a rubber strip 7. The rubber strip 7 forms in combination with the lower portions of the panels 10 a rainwater gutter 5. Due to this construction no separate tubular rainwater gutter is necessary, whereby the obstruction of the incident sunlight is further reduced.

The bars 11 are supported on each other and on the profiled beam 6 by means of angle pieces 13 gripping in the bars 11 and a draw bolt 12. The bars 11 support on a protruding edge of the profiled beam 6 which also serves as a condensation gutter 9. The profiled beam 6 is attached with fixing means 14 to the top U-profile of the main truss 3.

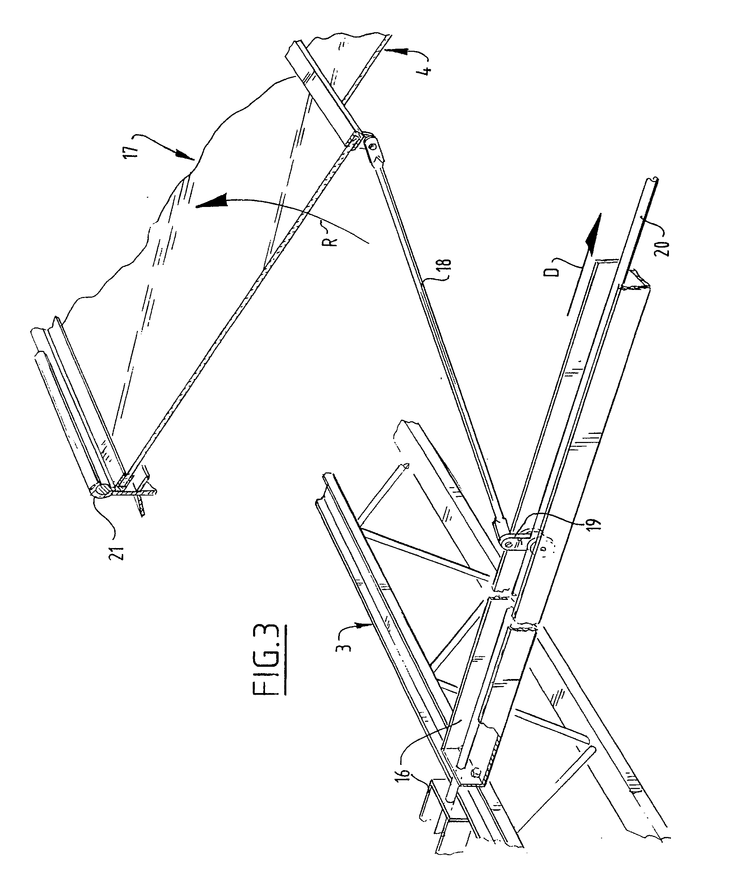

In the auxiliary trusses 16 (fig. 3) arranged at a mutual distance transversely of each main truss 3 are arranged operating means 20 which are provided with roller bodies 19 arranged thereon at mutual intervals. Each roller body 19, which is rollably movable in a guiding formed by the U-profile of the auxiliary truss 16, is connected over a jib 18 to a movable window part 17 of a covering part 4. The window part 17 is pivotally movable around a pivot shaft arranged in the ridge 21 of the covering part 4. The jib 18 converts the translation movement of the operating means 20 in the direction D into a rotation movement of the window part 17 in the direction R.

## Claims

1. Horticultural glasshouse which has a number of transparent side walls and at least two opposite walls of which are connected on their upper part by at least one lying main truss, and slopingly disposed transparent covering parts, whereof adjoining covering parts are connected in each case by elements having a groove in which a rainwater gutter is arranged, wherein each rainwater gutter is placed substantially vertically above a main truss and runs parallel thereto, **characterized in that** each rainwater gutter (5) is formed by a profiled beam (6) connecting the covering parts (4) and arranged on an associated main truss (3), which beam is covered on its upper side with a plastic sealing layer.

2. Horticultural glasshouse as claimed in claim 1, **characterized in that** the sealing layer has the form of a strip (7) with a practically bell-shaped cross-sectional profile connecting the covering parts (4), a tongue-shaped part (8) of which is clamped in the beam (6).

3. Horticultural glasshouse as claimed in claims 1 or 2, **characterized by** a condensation gutter (9) located under the covering parts and arranged between the rainwater gutter (5) and the associated main truss (3) and running parallel thereto.

4. Horticultural glasshouse as claimed in claim 3, **characterized in that** the rainwater gutter (5) and the condensation gutter (9) are formed by a beam (6) with a cross-sectional profile having branchings.

5. Horticultural glasshouse as claimed in any of the foregoing claims, **characterized by** at least one auxiliary truss (16) arranged transversely of the main truss (3) and connecting side walls (2) lying mutually opposite.

6. Horticultural glasshouse as claimed in claim 5, **characterized by** means for opening and closing a movable window part (17) of a covering part (4) which are arranged movably on the auxiliary truss (16).

7. Horticultural glasshouse as claimed in claim 6, **characterized in that** the movable window part (17) is pivotal and the means for opening and closing thereof comprise a roller body (19) arranged in the auxiliary truss (16) and connected over a jib (18) to the movable window part (17), which roller body (19) is drivably connected to operating means (20) movable in the direction of the auxiliary truss (16).

8. Combination of a horticultural glasshouse as claimed in any of the foregoing claims and a vehicle displaceable along the rainwater gutter (5), which vehicle comprises a carrier which is provided with at least one wheel guidable in the rainwater gutter (5) and with jibs laterally oriented on either side transversely of the main plane of the wheel and on the ends of which are arranged means for guiding the jibs along the line of contact (21) between adjoining covering parts (4).

9. Vehicle for use in a combination as claimed in claim 8.

FIG.1

4

FIG.2

FIG.3

EP 0 449 389 A1

European Patent Office

**EUROPEAN SEARCH REPORT**

Application Number

**EP 91 20 0765**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | CH-A-6 442 47 (PROVENCE)<br>* the whole document * | 1,3 | A 01 G 9/14 |
| Y | NL-A-8 801 606 (BOM BEHEER)<br>* page 2, line 19 - page 4, line 14; figures 1-3 * | 1,3 | |
| A | BE-A-9 037 05 (DE WIT)<br>* the whole document * | 1 | |
| A | NL-A-7 803 280 (PRIVA)<br>* page 2, line 23 - page 3, line 19; figures 1,2 * | 8,9 | |
| | | | **TECHNICAL FIELDS SEARCHED (Int. Cl.5)**<br><br>A 01 G |

The present search report has been drawn up for all claims

| Place of search | Date of completion of search | Examiner |
|---|---|---|
| The Hague | 27 June 91 | HERYGERS J.J. |